# EUROPEAN PATENT SPECIFICATION

(11) **EP 3 571 254 B1**
(45) Date of publication and mention of the grant of the patent: **27.09.2023**
(21) Application number: 18704112.4
(22) Date of filing: 19.01.2018
(51) Int. Cl.: C09J 5/06, C09J 167/04

(54) **BIODEGRADABLE HOT MELT ADHESIVES**
BIOLOGISCH ABBAUBARE SCHMELZKLEBSTOFFE
ADHÉSIFS THERMOFUSIBLES BIODÉGRADABLES

(30) Priority: 20.01.2017 US 201762448483 P
(43) Date of publication of application: 27.11.2019
(73) Proprietor: Meredian, Inc., Bainbridge, GA 39817 (US)
(72) Inventor: CARRAWAY, Daniel, Bainbridge GA 39817 (US); WANN, Steven, Bainbridge GA 39817 (US); ARNOLD, Rachelle, Bainbridge GA 39819 (US); GRUBBS III, Joe, B., Bishop GA 30621 (US)
(74) Representative: Boult Wade Tennant LLP
(86) International application number: PCT/US2018/014321
(87) International publication number: WO 2018/136679

(56) References cited:
- EP-A1- 1 236 753
- WO-A1-2014/074115
- US-A- 2 657 187
- Md Lechner ET AL: "Makromolekulare Chemie - Ein Lehrbuch für Chemiker, Physiker, Materialwissenschaftler und Verfahrenstechnike" In: "MAKROMOLEKULARE CHEMIE", 1 January 2003 (2003-01-01), XP055500155, ISBN: 978-3-7643-5343-8 page 237,
- Anonymous: "FAQ Brookfield measurements", , 13 June 2019 (2019-06-13), XP055596253, Retrieved from the Internet: URL:https://www.brookfieldengineering.com/ learning-center/faq [retrieved on 2019-06-13]

## Description

### CROSS-REFERENCE TO RELATED APPLICATIONS

This application claims the benefit of the earlier filing date of co-pending provisional application 62/448,483, filed January 20, 2017.

### FIELD

The present disclosure relates in general to hot melt adhesives and in particular to hot melt adhesives having improved heat stability, as well as high content of components which are bio-sourced and/ or biodegradable.

### BACKGROUND

Hot melt adhesives are used commercially to bond a wide variety of substrates. A principal advantage of hot melt adhesives is their lack of a liquid carrier in the adhesive composition. Without a liquid carrier, there is no need for a drying period after application so that production line speeds can be increased. In situations where organic solvents are used as liquid carriers, their elimination reduces environmental and human risks associated with their use. Elimination of the liquid carrier also reduces the weight and bulk of the adhesive for shipping and storage. WO2014/074115A1 discloses a hot melt adhesive for applying to substrate comprising paper or paperboard, comprising lactic acid oligomer or polymer, polylactide, aliphatic amide, and polyvinyl acetate.

Hot melt adhesives are typically melted and then held molten for a period of time in a heated vessel at a temperature close to the application temperature for the adhesive. The period of time the adhesive is held in a molten state may range from just a few hours to as long as several days. For hot melt adhesives derived from petroleum-based components, this extended heating time poses few problems for the integrity of the adhesive.

Nonetheless, it is still desirable to incorporate biodegradable, recyclable, and/or bio-sourced components into hot melt adhesive compositions due to environmental and health concerns. However, for adhesives derived from components that are bio-sourced and/or biodegradable, the polymeric components that give the adhesive its strength and have been found to be susceptible to the degradation reactions noted above both during the application period and after a bond has formed. As a result, hot melt adhesives derived from bio-sourced components generally exhibit a fairly low heat stability when maintained in a heated, molten state for an extended period of time. Because of this, there have to date been few, if any, commercially success applications of such hot melt adhesives.

It would therefore be advantageous to provide a hot melt adhesive composition which incorporate a high content of bio-sourced and/or biodegradable components, which also exhibits heat stability as compared to earlier hot melt adhesive compositions.

### SUMMARY

In a first aspect, the present disclosure provides a hot melt adhesive composition. According to one embodiment, the hot melt adhesive includes at least the following components: (1) from about 10 to about 20 weight percent of a lactic acid oligomer or polymer having a weight average molecular weight from about 1500 to about 3000; (2) from about 40 to about 75 weight percent of polylactide having a weight average molecular weight from about 10,000 to about 18,000; (3) from about 20 to about 35 weight percent of a polyester formed from the copolymerization of one or more diols and one or more dicarboxylic acids; and (4) from about 0.5 to about 5 weight percent of a copolymer of vinyl acetate and a mono-unsaturated short chain fatty acid, the fatty acid having from 4 to 12 carbon atoms, All of the aforementioned weight percentages are based on the overall weight of the hot melt adhesive composition.

In certain embodiments of the present disclosure, the hot melt adhesive preferably has a viscosity from about 1000 centipoise to about 6000 centipoise at a temperature of about 143°C. More preferably, the hot melt adhesive has a viscosity from about 2000 centipoise to about 4000 centipoise at a temperature of about 143°C, and most preferably a viscosity from about 2000 centipoise to about 3000 centipoise at a temperature of about 143°C.

In certain embodiments of the present disclosure, the lactic acid oligomer or polymer preferably has a viscosity from about 350 centipoise to about 450 centipoise at a temperature of about 280°C.

In some embodiments of the present disclosure, the polylactide preferably has a viscosity from about 1800 centipoise to about 2200 centipoise at a temperature of about 143°C.

In some embodiments of the present disclosure, the polylactide also includes a polymer capping group formed by reaction of the polylactide with a carboxylic acid or a carboxylic acid derivative. More preferably, the polymer capping groups is form by reaction of the polylactide with an acid anhydride. Most preferably, the acid anhydride is propionic anhydride.

In one embodiment of the present disclosure, the polyester preferably has a viscosity from about 15,000 centipoise to about 35,000 centipoise at a temperature of about 216°C. In certain embodiments of the present disclosure, the polyester also preferably has a weight average molecular weight from about 55,000 to about 72,000.

In some embodiments of the present disclosure, the polyester also includes a polymer capping group formed by reaction of the polyester with a carboxylic acid or a carboxylic acid derivative. More preferably, the polymer capping groups is form by reaction of the polyester with an acid anhydride. Most preferably, the acid anhydride is propionic anhydride.

In some embodiments of the present disclosure, the polyester is polybutylene(succinate-co-adipate) ("PBSA"). In certain embodiments of the present disclosure, the one or more dicarboxylic acids in the PBSA preferably include from about 10 to about 30 mole percent adipic acid and from about 70 to about 90 mole percent succinic acid.

In some embodiments of the present disclosure, the mono-unsaturated short chain fatty acid is preferably crotonic acid.

In a second aspect, the present disclosure provides an adhesive-coated substrate. According to one embodiment, the adhesive-coated substrate includes a substrate having at least a first side; and a hot melt adhesive coating applied to at least of portion of the substrate first side. The hot melt adhesive includes at least the following components: (1) from about 10 to about 20 weight percent of a lactic acid oligomer or polymer having a weight average molecular weight from about 1500 to about 3000; (2) from about 40 to about 75 weight percent of polylactide having a weight average molecular weight from about 10,000 to about 18,000; (3) from about 20 to about 35 weight percent of a polyester formed from the copolymerization of one or more diols and one or more dicarboxylic acids; and (4) from about 0.5 to about 5 weight percent of a copolymer of vinyl acetate and a mono-unsaturated short chain fatty acid, the fatty acid having from 4 to 12 carbon atoms. All of the aforementioned weight percentages are based on the overall weight of the hot melt adhesive composition.

In yet another aspect, the present disclosure provides a method for making a hot melt adhesive. According to one embodiment, the method includes the a first step of melt blending, at a temperature from about 140 to about 175 °C, a mixture which includes at least the following components: (1) from about 10 to about 20 weight percent of a lactic acid oligomer or polymer having a weight average molecular weight from about 1500 to about 3000; (2) from about 40 to about 75 weight percent of polylactide having a weight average molecular weight from about 10,000 to about 18,000; (3) from about 20 to about 35 weight percent of a polyester formed from the copolymerization of one or more diols and one or more dicarboxylic acids; and (4) from about 0.5 to about 5 weight percent of a copolymer of vinyl acetate and a mono-unsaturated short chain fatty acid, the fatty acid having from 4 to 12 carbon atoms.

The method also includes a second step of further blending the mixture with from about 1 to about 5 weight percent of a carboxylic acid or a carboxylic acid derivative, at a temperature at a temperature from about 140 to about 175 °C to provide a stabilized hot melt adhesive. All of the aforementioned weight percentages are based on the overall weight of the hot melt adhesive.

### DETAILED DESCRIPTION

The present disclosure provides a hot melt adhesive composition. According to one embodiment, the hot melt adhesive generally includes at least the following components: (1) from about 10 to about 20 weight percent of a lactic acid oligomer or polymer; (2) from about 40 to about 75 weight percent of polylactide; (3) from about 20 to about 35 weight percent of a polyester formed from the copolymerization of one or more diols and one or more dicarboxylic acids; and (4) from about 0.5 to about 5 weight percent of a copolymer of vinyl acetate and a mono-unsaturated short chain fatty acid, the fatty acid having from 4 to 12 carbon atoms. All of the aforementioned weight percentages are based on the overall weight of the hot melt adhesive composition.

The first component of the hot melt adhesive composition is a low molecular weight lactic acid oligomer or polymer. In general, the lactic acid oligomer or polymer has a weight average molecular weight from about 1500 to about 3000. The lactic acid oligomer or polymer is generally formed from a lactic acid starting material which enriched in its L- enantiomer relative to its D- enantiomer. Preferably, the lactic acid starting material is at least 97% L-lactic acid.

The lactic acid oligomer or polymer generally makes up from 10 to about 20 weight percent of the hot melt adhesive composition. Preferably, if measured by itself, the lactic acid oligomer or polymer exhibits a viscosity from about 350 centipoise to about 450 centipoise at a temperature of about 280°C. Functionally, within the hot melt adhesive, the lactic acid oligomer or polymer acts as a tackifier, improving the tackiness and wetting of the substrate.

The second component of the hot melt adhesive composition is a polylactide. In general, the polylactide has a weight average molecular weight from about 10,000 to about 18,000. The polylactide generally makes up from 40 to about 75 weight percent of the hot melt adhesive composition. Preferably, if measured by itself, the polylactide exhibits a viscosity from about 1800 centipoise to about 2200 centipoise at a temperature of about 143°C.

In some embodiments of the present disclosure, the polylactide also includes a polymer capping group formed by reaction of the polylactide with a carboxylic acid or a carboxylic acid derivative. More preferably, the polymer capping groups is form by reaction of the polylactide with an acid anhydride. Most preferably, the acid anhydride is propionic anhydride.

The polylactide functions as the base material in the hot melt adhesive. Having a higher molecular weight than the other components and being present in a large weight percentage, the polylactide acts as the backbone of the composition and provides the primary properties of the adhesive.

The third component of the hot melt adhesive composition is a polyester formed from the copolymerization of one or more diols and one or more dicarboxylic acids. In general, the polyester has a weight average molecular weight from about 55,000 to about 72,000. The polyester generally makes up from 20 to about 35 weight percent of the hot melt adhesive composition. Preferably, if measured by itself, the polyester exhibits a viscosity from about 15,000 centipoise to about 35,000 centipoise at a temperature of about 216°C. Functionally, within the hot melt adhesive, the diol / diacid polymer provides improved plasticity, tensile strength, and heat resistance for the composition.

Suitable diols which may be used for the diol moieties of the polyester include ethylene, propylene, butylene, and hexylene. A combination of multiple diols may also be incorporated into the polyester. Suitable diacids which may be used for the diacid moieties of the polyester include dicarboxylic acids having from 2 to 12 carbon atoms.

In a preferred embodiment according to the present disclosure, the polyester may include moieties formed from butylene, succinic acid, and adipic acid. Thus, the polyester may be polybutylene(succinate-co-adipate) or "PBSA". In these embodiments, the one or more dicarboxylic acids in the PBSA preferably include from about 10 to about 30 mole percent adipic acid and from about 70 to about 90 mole percent succinic acid.

As with the polylactide, in some instances, the polyester may also include a polymer capping group formed by reaction of the polyester with a carboxylic acid or a carboxylic acid derivative. More preferably, the polymer capping groups is form by reaction of the polyester with an acid anhydride. Most preferably, the acid anhydride is propionic anhydride.

The fourth component of the hot melt adhesive composition is a copolymer of vinyl acetate and a mono-unsaturated short chain fatty acid, the fatty acid having from 4 to 12 carbon atoms. In general, this copolymer makes up from about 0.5 to about 5 weight percent of the hot melt adhesive composition. In a preferred embodiment, the mono-unsaturated short chain fatty acid is preferably crotonic acid. Thus, the copolymer is preferably a copolymer of vinyl acetate and crotonic acid. A suitable copolymer is commercially available under the tradename WACKER VINNAPAS C305.

The vinyl acetate / fatty acid copolymer functions within the hot melt adhesive to improve cohesive and adhesive strength for the formulation, especially when the adhesive is exposed to high humidity conditions.

In some instance, the polymeric composition may also include one or more further additives. For instance, the polymeric composition may include one or more additives selected from the group consisting of fillers, pigments, anti-caking additives, defoaming agents, release additives, antioxidants, stabilizers, waxes, plasticizers, biocides, and anti-static additives.

Preferably as many of the components of the hot melt adhesive as possible are derived from renewable resources. Such components may be referred to as being bio-sourced. It is also preferable that as many of the components of the hot melt adhesive as possible are biodegradable and/or recyclable. However, it is difficult to prepare a suitable hot melt adhesive using only these materials. Nonetheless, according to certain embodiments of the present disclosure, at least 50 weight percent of the components of the hot melt adhesive are bio-sourced. More preferably, at least 75 weight percent of the components of the hot melt adhesive are bio-sourced. In particular, at least the lactic acid oligomer or polymer and the polylactide are generally derived from renewable resources. In some instances, the polyester may also be derived from renewable resources. For instance, PBSA may be derived from renewable resources.

Further, according to certain embodiments of the present disclosure, at least 50 weight percent of the components of the hot melt adhesive are biodegradable. More preferably, at least 75 weight percent of the components of the hot melt adhesive are biodegradable. In particular, at least the lactic acid oligomer or polymer and the polylactide are generally biodegradable. In some instances, the polyester may also be a biodegradable polymer such as PBSA.

In general, the hot melt adhesive composition is typically prepared by combining and melt blending its components. For instance, in a first (and in some instances single) step, the lactic acid oligomer or polymer, the polylactide, the diol / diacid polyester, and the copolymer of vinyl acetate and a mono-unsaturated short chain fatty acid may be combined and melt blended together. The melt blending is generally carried out at a temperature sufficient to melt all of the components, typically from about 140 to about 175 °C.

In general, it is believed that order of addition of the components when mixing does not affect the final properties of the adhesive composition. The method also includes a second step of further blending the mixture with from about 1 to about 5 weight percent of a carboxylic acid or a carboxylic acid derivative, at a temperature at a temperature from about 140 to about 175 °C to provide a stabilized hot melt adhesive. All of the aforementioned weight percentages are based on the overall weight of the hot melt adhesive.

Optionally, in some instances, the method for preparing the hot melt adhesive may also include a second step of further blending the aforementioned mixture with from about 1 to about 5 weight percent of a carboxylic acid or a carboxylic acid derivative at a temperature at a temperature from about 140 to about 175 °C. Acid anhydrides are preferred carboxylic acid derivatives for this purpose, and propionic anhydride is particularly preferred. Addition of the carboxylic acid or a carboxylic acid derivative at these temperatures is believed to lead to reaction with the polylactide and/or the diol / diacid polyester and to the formation of the aforementioned polymer capping group on the ends of the polylactide and/or the diol / diacid polyester molecules. The formation of these polymer capping groups is believed to improve the heat stability of the hot melt adhesive composition, as further described below.

In some embodiments, either or both of the mixing steps may be carried out using a heated tank with a suitable agitator such as a high shear mixer for example. Alternatively, however, the components of the hot melt adhesive composition may be added to an extruder and heated and mixed within the extruder before being extruded through a die. If desired, the hot melt adhesive composition may be extruded directly onto a suitable substrate. More typically, however, the hot melt adhesive composition is initially extruded into pellets or any other desired form and then is allowed to cool and solidify. Once in a pelletized or other solid form, the hot melt adhesive may be packaged for storage and / or shipping. The pellets are eventually reheated and melted and applied to suitable substrate during a second extrusion step.

Once prepared as described above, the hot melt adhesive of the present disclosure generally has a viscosity from about 1000 centipoise to about 6000 centipoise at a temperature of about 143°C. More preferably, the hot melt adhesive has a viscosity from about 2000 centipoise to about 4000 centipoise at a temperature of about 143°C, and most preferably a viscosity from about 2000 centipoise to about 3000 centipoise at a temperature of about 143°C.

Advantageously, the hot melt adhesive composition has been found to exhibit improved stability when exposure to elevated temperatures. For instance, the hot melt adhesive composition has been found to remain viscosity stable for least 4 to 12 hours before significant degradation of the adhesive composition renders the composition unusable. Preferably, the hot melt adhesive composition retains a viscosity from about 4000 to about 5000 centipoise after being held at a temperature from about 135 °C to about 145 °C for a time period from about 8 to about 16 hours. More preferably, the hot melt adhesive composition retains a viscosity from about 4000 to about 5000 centipoise after being held at a temperature from about 135 °C to about 145 °C for a time period of at least 48 hours.

Once prepared, the hot melt adhesive composition is heated to a temperature of at least 140 °C in order to insure good flowablility. The hot melt adhesive composition may then be applied to any desired substrate surface. For instance, the hot melt adhesive may be applied to paper or paperboard. Substrates to which the hot melt adhesive is applied may be used for both hot and cold food service items (such as plates, cups, and bowls) paperboard packaging, and carton or case seals including those used for frozen foods.

Suitable methods for application of the hot melt adhesive to the substrate include extrusion nozzle application, hand gun application, roll coating application, and profile wrapping application.

Once the hot melt adhesive is applied to the substrate and allowed to cool, the adhesive preferably exhibits good initial bond strength.

### EXAMPLES

The following nonlimiting examples illustrate various additional aspects of the invention. Unless otherwise indicated, temperatures are in degrees Celsius and percentages are by weight.

### Example 1 & 2 - Preparation of Hot Melt Adhesive Compositions with End Capping.

### Example 1 - In this example, a hot melt adhesive composition was prepared. A two liter reactor equipped with a condenser was charged with the following components:

| Component | Weight (grams) | Weight percentage |
|---|---|---|
| Polylactide | 1017 g | 56.5% |
| Lactic acid oligomer | 261 g | 14.5% |
| Polybutylene (succinate-co-adipate) ("PBSA") | 468 g | 26.0% |
| Wacker Vinnapas C305 | 54 g | 3.0% |
| Total | 1800 g | 100.0% |

The polylactide had a weight average molecular weight of about 14,879. The lactic acid oligomer had a weight average molecular weight of about 1645. Vinnapas C305 is a copolymer of vinyl acetate and crontonic acid.

The reactor pressure was reduced to 1 torr and allowed to sit overnight to remove any surface moisture. Under nitrogen, the reactor was then heated to 150 °C for 3 hours until all materials were melted and homogenously blended. Propionic anhydride (55.9 grams) was added to the reactor and allowed to stir for 2 hours, after which the pressure was slowly reduced down to 2-5 torr to remove any excess propionic anhydride. The adhesive product was collected as a tan solid. The weight average molecular weight (Mw) of the final adhesive was measured to be 36447 and the polydispersity was measured to be 4.02.

### Example 2 - A second hot melt adhesive was prepared. As in Example 1, a two liter reactor equipped with a condenser was charged with the following components:

| Component | Weight (grams) | Weight percentage |
|---|---|---|
| Polylactide | 904 | 56.5 |
| Lactic acid oligomer | 224 | 14.0 |
| Polybutylene (succinate-co-adipate) ("PBSA") | 416 | 26.0 |
| Wacker Vinnapas C305 | 56 | 3.5 |
| Total | 1600 | 100.0% |

The polylactide had a weight average molecular weight of about 18,323. The lactic acid oligomer had a weight average molecular weight of about 2609.

Again, the reactor pressure was reduced to 1 torr and allowed to sit overnight to remove any surface moisture. Under nitrogen, the reactor was then heated to 150 °C for 3 hours until all materials were melted and homogenously blended. Succinic anhydride (51.9 grams) was added to the reactor and allowed to stir for 2 hours, after which the pressure was slowly reduced down to 2-5 torr to remove any excess propionic anhydride. The hot melt adhesive product was collected as a tan solid.

### Example 3 - Viscosity Testing.

The hot melt adhesive of Example 1 was submitted to viscosity testing using a DV-II+ Brookfield viscometer equipped with a Thermosel for more accurate temperature control and a #27 aluminum spindle. In the testing procedure, 16 grams of the hot melt adhesive resin was added to an aluminum cup and placed in the Thermosel at 290 °F/ 143 °C. After 10 minutes of equilibration at 10 RPM, the viscosity of the material was recorded. Using this procedure, the initial viscosity of the adhesive (prior to aging at elevated temperature) was measured to be 5100 centipoise.

The hot melt adhesive was then aged by being held at a temperature of 290 °F/143 °C for a total of 72 hours, with the viscosity being measured and recorded again at 24 hours, 48 hours, and 72 hours. The viscosity measurements are summarized in the following table:

### Adhesive Viscosity, Initial & After Aging

| Time at 143°C (hours) | 0 | 24 | 48 | 72 |
|---|---|---|---|---|
| Viscosity (cP) | 5100 | 5300 | 4125 | 2638 |

These viscosity numbers demonstrate that the inventive hot melt adhesive exhibit both good initial viscosity and that this viscosity is substantially maintained when the hot melt adhesive composition is held at an elevated temperature for an extended period of time. This indicates that the components of the composition are slow to degrade under these elevated temperature conditions.

### Examples 4 - 7: Adhesive Testing.

The adhesive properties of the hot melt adhesive of Example 1 were analyzed in a series of tests. The set time, open time, and the hot tack seal strength were each separately measured for the hot melt adhesive of Example 1. Each of the test were carried out using Hot Melt Tester, Model ASM-15N. Application temperature of the adhesive during the testing was 290 °F/ 143 °C.

### Example 4 - Set Time Testing

The set time for the hot melt adhesive of Example 1 was first measured. As used herein, "set time" refers to the amount of time required for a bond to form after an adhesive is applied to a first substrate and a second substrate is pressed against it. For example, glue may be applied to a piece of cardboard and another piece of cardboard may then be applied over the adhesive and held for a few seconds. The set time is the minimum amount of time the two pieces must be held together to insure that the two piece are in fact bonded together and will not separate after the hold is released.

The initial set time for the adhesive was measured, and then the set time was measured again after the hot melt adhesive was aged by being held at a temperature of 290 °F/ 143 °C for a total of 72 hours, with the set time being measured and recorded again at 24 hours, 48 hours, and 72 hours. The set time measurements are summarized in the following table:

### Adhesive Set Time, Initial & After Aging

| Time at 143°C (hours) | 0 | 24 | 48 | 72 |
|---|---|---|---|---|
| Set time (second) | 3.5 s | 4 s | 5 s | 4.5 s |

These viscosity numbers demonstrate that the inventive hot melt adhesive exhibit both a favorable initial set time and that this set time does not degrade substantially when the hot melt adhesive composition is held at an elevated temperature for an extended period of time.

### Example 5 - Additional Set Time Testing

Two additional samples of the hot melt adhesive of Example 1 were submitted for set time testing. Prior to measurement of the set time, the first sample was heated to 143°C, then removed from heat and allowed to cool to room temperature, and then reheated back to 143°C. The second sample was allowed to age overnight at 143°C in a humid environment of approximately 80% relative humidity prior to the set time measurement. The set time measurements are summarized in the following table:

### Adhesive Set Times - Heat/Cool/Reheat and High Humidity

| Sample Conditions | Heated/Cooled/Reheated | Overnight at 80% RH |
|---|---|---|
| Set time (second) | 3 s | 4.5 s |

### Example 6 - Open Time Testing

The open time for the hot melt adhesive of Example 1 was also measured. As used herein, "open time" refers to the length of time after an adhesive is applied to a substrate in which a bond may be formed. For example, glue may be applied to a first piece of cardboard and after 5 seconds, another piece of cardboard may still be applied and still bonded to the first cardboard piece. But after 6 seconds, the glue may be too hard and set to form a bond between the two cardboard pieces. In this instance, the open time would then be 5 seconds.

The open time for the adhesive was measured after the adhesive was heated to a temperature of 290 °F/ 143 °C. The open time was found to be 10 seconds.

### Example 7 - Hot Tack Testing

The hot tack seal strength for the hot melt adhesive of Example 1 was also measured. As used herein, "hot tack seal strength" refers to the strength of heat seals formed between thermoplastic surfaces of flexible webs, immediately after the seal has been made and before it cools to room temperature. This measurement is of significance in high speed form-fill-seal packaging operations. Hot tack seal strength was measured in accordance with ASTM F-1921. The hot tack was measured at both 0.5 second after seal formation and at 1.0 seconds after seal formation. The results are reported below:

| | |
|---|---|
| Hot Tack Strength at 0.5 second | 4.318 kg |
| Hot Tack Strength at 1.0 second | 4.732 kg |

The hot tack seal strength numbers indicate that the inventive hot melt composition may suitably in high speed form-fill-seal packaging operations.

### Comparative Example 8 - Mechanical Testing of Technomelt 8370

In this Example, samples of a conventional EVA hot melt adhesive (Technomelt 8370, available from Henkel) were subjected to adhesive testing in a manner similar to that described above in Examples 4-6.

Multiple replicates were tested at three different temperatures (325 °F, 350 °F, and 375 °F) and averaged to determine the average set time and open time for the Technmelt adhesive. The results are summarized in the following table:

### Set Time and Open Time for Technmelt 8370

| Test No. | Hot Melt Application Temp | Ave. Set Time (s) | Ave. Open Time (s) |
|---|---|---|---|
| 1 | 176.4 °C (350 °F) | 2.5 s | 12 s |
| 2 | 163 °C (325 °F) | 2s | 9s |
| 3 | 190.5 °C (375 °F) | 2.5 s | 11 s |

As noted above, typical set times for the biodegradable hot melt of the present invention range from about 3 - 5 seconds, and typical open times for the biodegradable hot melt of the present invention to be about 10 seconds. Thus, it may be seen that the set times and open times for the inventive biodegradable are comparable to those for the conventional (non-biodegradable) Technomelt hot melt.

The foregoing description of preferred embodiments for this invention has been presented for purposes of illustration and description. It is not intended to be exhaustive or to limit the invention to the precise form disclosed. Obvious modifications or variations are possible in light of the above teachings. The embodiments are chosen and described in an effort to provide the best illustrations of the principles of the invention and its practical application, and to thereby enable one of ordinary skill in the art to utilize the invention in various embodiments and with various modifications as are suited to the particular use contemplated. All such modifications and variations are within the scope of the invention as determined by the appended claims when interpreted in accordance with the breadth to which they are fairly, legally, and equitably entitled.

## Claims

1. A hot melt adhesive comprising:
from about 10 to about 20 weight percent of a lactic acid oligomer or polymer having a weight average molecular weight from about 1500 to about 3000;
from about 40 to about 75 weight percent of polylactide having a weight average molecular weight from about 10,000 to about 18,000;
from about 20 to about 35 weight percent of a polyester formed from the copolymerization of one or more diols and one or more dicarboxylic acids; and
from about 0.5 to about 5 weight percent of a copolymer of vinyl acetate and a mono-unsaturated short chain fatty acid, the fatty acid having from 4 to 12 carbon atoms,
wherein all weight percentages are based on the overall weight of the hot melt adhesive.

2. The hot melt adhesive of Claim 1, wherein the hot melt adhesive has a viscosity, measured as described in the description, from about 1000 centipoise to about 6000 centipoise at a temperature of about 143°C.

3. The hot melt adhesive of Claim 1, wherein the lactic acid oligomer or polymer has a viscosity, measured as described in the description, from about 350 centipoise to about 450 centipoise at a temperature of about 280°C.

4. The hot melt adhesive of Claim 1, wherein the polylactide has a viscosity, measured as described in the description, from about 1800 centipoise to about 2200 centipoise at a temperature of about 143°C.

5. The hot melt adhesive of Claim 1, wherein the polylactide further comprises a polymer capping group formed by reaction of the polylactide with a carboxylic acid or a carboxylic acid derivative.

6. The hot melt adhesive of Claim 1, wherein the polyester has a viscosity, measured as described in the description, from about 15,000 centipoise to about 35,000 centipoise at a temperature of about 216°C.

7. The hot melt adhesive of Claim 1, wherein the polyester has a weight average molecular weight from about 55,000 to about 72,000.

8. The hot melt adhesive of Claim 1, wherein the polyester further comprises a polymer capping group formed by reaction of the polylactide with a carboxylic acid or a carboxylic acid derivative.

9. The hot melt adhesive of Claim 1, wherein the polyester is polybutylene(succinate-co-adipate) ("PBSA").

10. The hot melt adhesive of Claim 1, wherein the mono-unsaturated short chain fatty acid is crotonic acid.

11. An adhesive-coated substrate comprising:
a substrate having at least a first side; and
the hot melt adhesive according to any of claims 1 to 10 as a coating applied to at least of portion of the substrate first side.

12. A method for making a hot melt adhesive, comprising the steps of:
melt blending, at a temperature from about 140 to about 175 °C, a mixture which comprises
from about 10 to about 20 weight percent of a lactic acid oligomer or polymer having a weight average molecular weight from about 1500 to about 3000,
from about 40 to about 75 weight percent of polylactide having a weight average molecular weight from about 10,000 to about 18,000,
from about 20 to about 35 weight percent of a polyester formed from the copolymerization of one or more diols and one or more dicarboxylic acids, and
from about 0.5 to about 5 weight percent of a copolymer of vinyl acetate and a mono-unsaturated short chain fatty acid, the fatty acid having from 4 to 12 carbon atoms; and
further blending the mixture with from about 1 to about 5 weight percent of a carboxylic acid or a carboxylic acid derivative, at a temperature at a temperature from about 140 to about 175 °C to provide a stabilized hot melt adhesive,
wherein all weight percentages are based on the overall weight of the hot melt adhesive.

13. The method of Claim 12, wherein the carboxylic acid or a carboxylic acid derivative comprises an acid anhydride.

14. The method of Claim 12, wherein the polyester has a weight average molecular weight from about 55,000 to about 72,000.

15. The method of Claim 12, wherein the polyester is polybutylene(succinate-co-adipate) ("PBSA").

16. The method of Claim 12, wherein the mono-unsaturated short chain fatty acid is crotonic acid.

## Patentansprüche

1. Schmelzklebstoff, umfassend:
etwa 10 bis etwa 20 Gewichtsprozent eines Milchsäure-Oligomers oder -Polymers mit einem gewichtsmittleren Molekulargewicht von etwa 1500 bis etwa 3000;
etwa 40 bis etwa 75 Gewichtsprozent Polylactid mit einem gewichtsmittleren Molekulargewicht von etwa 10.000 bis etwa 18.000;
etwa 20 bis etwa 35 Gewichtsprozent eines aus der Copolymerisation eines oder mehrerer Diole und einer oder mehrerer Dicarbonsäuren gebildeten Polyesters; und
von etwa 0,5 bis etwa 5 Gewichtsprozent eines Copolymers aus Vinylacetat und einer einfach ungesättigten kurzkettigen Fettsäure, wobei die Fettsäure 4 bis 12 Kohlenstoffatome aufweist,
wobei alle Gewichtsprozentsätze auf das Gesamtgewicht des Schmelzklebstoffs bezogen sind.

2. Schmelzklebstoff nach Anspruch 1, wobei der Schmelzklebstoff eine Viskosität, gemessen wie in der Beschreibung angegeben, von etwa 1000 Centipoise bis etwa 6000 Centipoise bei einer Temperatur von etwa 143°C aufweist.

3. Schmelzklebstoff nach Anspruch 1, bei dem das Milchsäure-Oligomer oder -Polymer eine Viskosität, gemessen wie in der Beschreibung angegeben, von etwa 350 Centipoise bis etwa 450 Centipoise bei einer Temperatur von etwa 280°C aufweist.

4. Schmelzklebstoff nach Anspruch 1, bei dem das Polylactid eine Viskosität, gemessen wie in der Beschreibung angegeben, von etwa 1800 Centipoise bis etwa 2200 Centipoise bei einer Temperatur von etwa 143 °C aufweist.

5. Schmelzklebstoff nach Anspruch 1, bei dem das Polylactid ferner eine durch Reaktion des Polylactids mit einer Carbonsäure oder einem Carbonsäurederivat gebildete Polymerabschlussgruppe umfasst.

6. Schmelzklebstoff nach Anspruch 1, bei dem der Polyester eine Viskosität, gemessen wie in der Beschreibung angegeben, von etwa 15.000 Centipoise bis etwa 35.000 Centipoise bei einer Temperatur von etwa 216°C aufweist.

7. Schmelzklebstoff nach Anspruch 1, bei dem der Polyester ein gewichtsmittleres Molekulargewicht von etwa 55.000 bis etwa 72.000 aufweist.

8. Schmelzklebstoff nach Anspruch 1, bei dem der Polyester ferner eine durch Reaktion des Polylactids mit einer Carbonsäure oder einem Carbonsäurederivat gebildete Polymerabschlussgruppe umfasst.

9. Schmelzklebstoff nach Anspruch 1, bei dem der Polyester Polybutylen(succinat-co-adipat) ("PBSA") ist.

10. Schmelzklebstoff nach Anspruch 1, bei dem die einfach ungesättigte kurzkettige Fettsäure Crotonsäure ist.

11. Mit Klebstoff beschichtetes Substrat, umfassend:
ein Substrat mit mindestens einer ersten Seite; und
den Schmelzklebstoff nach einem der Ansprüche 1 bis 10 als auf mindestens einen Teil der ersten Seite des Substrats aufgetragene Beschichtung.

12. Verfahren zur Herstellung eines Schmelzklebstoffs mit den Schritten:
Schmelzmischen, bei einer Temperatur von etwa 140 bis etwa 175 °C, eines Gemischs, das umfasst:
etwa 10 bis etwa 20 Gewichtsprozent eines Milchsäure-Oligomers oder -Polymers mit einem gewichtsmittleren Molekulargewicht von etwa 1500 bis etwa 3000,
etwa 40 bis etwa 75 Gewichtsprozent Polylactid mit einem gewichtsmittleren Molekulargewicht von etwa 10.000 bis etwa 18.000,
etwa 20 bis etwa 35 Gewichtsprozent eines durch Copolymerisation von einem oder mehreren Diolen und einer oder mehreren Dicarbonsäuren gebildeten Polyesters und
etwa 0,5 bis etwa 5 Gewichtsprozent eines Copolymers aus Vinylacetat und einer einfach ungesättigten kurzkettigen Fettsäure, wobei die Fettsäure 4 bis 12 Kohlenstoffatome aufweist; und
ferner Vermischen des Gemischs mit etwa 1 bis etwa 5 Gewichtsprozent einer Carbonsäure oder eines Carbonsäurederivats bei einer Temperatur von etwa 140 bis etwa 175 °C, um einen stabilisierten Schmelzklebstoff bereitzustellen,
wobei alle Gewichtsprozentsätze auf das Gesamtgewicht des Schmelzklebstoffs bezogen sind.

13. Verfahren nach Anspruch 12, wobei die Carbonsäure oder ein Carbonsäurederivat ein Säureanhydrid umfasst.

14. Verfahren nach Anspruch 12, bei dem der Polyester ein gewichtsmittleres Molekulargewicht von etwa 55.000 bis etwa 72.000 aufweist.

15. Verfahren nach Anspruch 12, bei dem der Polyester Polybutylen(succinat-co-adipat) ("PBSA") ist.

16. Verfahren nach Anspruch 12, bei dem die einfach ungesättigte kurzkettige Fettsäure Crotonsäure ist.

## Revendications

1. Adhésif thermofusible comprenant :
d'environ 10 à environ 20 % en poids d'un oligomère ou polymère d'acide lactique ayant un poids moléculaire moyen d'environ 1500 à environ 3000 ;
d'environ 40 à environ 75 % en poids de polylactide ayant un poids moléculaire moyen en poids d'environ 10000 à environ 18000 ;
d'environ 20 à environ 35 % en poids d'un polyester formé à partir de la copolymérisation d'un ou plusieurs diols et d'un ou plusieurs acides dicarboxyliques ; et
d'environ 0,5 à environ 5 % en poids d'un copolymère d'acétate de vinyle et d'un acide gras à chaîne courte mono-insaturé, l'acide gras ayant de 4 à 12 atomes de carbone,
tous les pourcentages en poids sont basés sur le poids total de l'adhésif thermofusible .

2. Adhésif thermofusible selon la revendication 1, dans lequel l'adhésif thermofusible a une viscosité, mesurée comme décrit dans la description, d'environ 1000 centipoises à environ 6000 centipoises à une température d'environ 143°C.

3. Adhésif thermofusible selon la revendication 1, dans lequel l'oligomère ou le polymère d'acide lactique a une viscosité, mesurée comme décrit dans la description, d'environ 350 centipoises à environ 450 centipoises à une température d'environ 280°C.

4. Adhésif thermofusible selon la revendication 1, dans lequel le polylactide a une viscosité, mesurée comme décrit dans la description, d'environ 1800 centipoises à environ 2200 centipoises à une température d'environ 143°C.

5. Adhésif thermofusible selon la revendication 1, dans lequel le polylactide comprend en outre un groupe de recouvrement polymère formé par réaction du polylactide avec un acide carboxylique ou un dérivé d'acide carboxylique.

6. Adhésif thermofusible selon la revendication 1, dans lequel le polyester a une viscosité, mesurée comme décrit dans la description, d'environ 15000 centipoises à environ 35000 centipoises à une température d'environ 216°C.

7. Adhésif thermofusible selon la revendication 1, dans lequel le polyester a un poids moléculaire moyen d'environ 55000 à environ 72000.

8. Adhésif thermofusible selon la revendication 1, dans lequel le polyester comprend en outre un groupe de recouvrement polymère formé par réaction du polylactide avec un acide carboxylique ou un dérivé d'acide carboxylique.

9. Adhésif thermofusible selon la revendication 1, dans lequel le polyester est le polybutylène(succinate-co-adipate) (« PBSA »).

10. Adhésif thermofusible selon la revendication 1, dans lequel l'acide gras à chaîne courte mono-insaturé est l'acide crotonique.

11. Substrat revêtu d'adhésif comprenant :
un substrat présentant au moins un premier côté ; et
l'adhésif thermofusible selon l'une des revendications 1 à 10 comme revêtement appliqué sur au moins une partie du premier côté du substrat.

12. Procédé de réalisation d'un adhésif thermofusible, comprenant les étapes consistant à :
mélanger à l'état fondu, à une température d'environ 140 à environ 175°C, un mélange qui comprend
d'environ 10 à environ 20 % en poids d'un oligomère ou polymère d'acide lactique ayant un poids moléculaire moyen en poids d'environ 1500 à environ 3000,
d'environ 40 à environ 75 % en poids de polylactide ayant un poids moléculaire moyen d'environ 10000 à environ 18000,
d'environ 20 à environ 35 % en poids d'un polyester formé à partir de la copolymérisation d'un ou plusieurs diols et d'un ou plusieurs acides dicarboxyliques, et
d'environ 0,5 à environ 5 % en poids d'un copolymère d'acétate de vinyle et d'un acide gras à chaîne courte mono-insaturé, l'acide gras ayant de 4 à 12 atomes de carbone ; et
mixer encore le mélange avec d'environ 1 à environ 5 % en poids d'un acide carboxylique ou d'un dérivé d'acide carboxylique, à une température d'environ 140 à environ 175°C pour aboutir à un adhésif thermofusible stabilisé,
dans lequel tous les pourcentages en poids sont basés sur le poids total de l'adhésif thermofusible.

13. Procédé selon la revendication 12, dans lequel l'acide carboxylique ou un dérivé d'acide carboxylique comprend un anhydride d'acide.

14. Procédé selon la revendication 12, dans lequel le polyester a un poids moléculaire moyen en poids d'environ 55000 à environ 72000.

15. Procédé selon la revendication 12, dans lequel le polyester est le polybutylène(succinate-co-adipate) (« PBSA »).

16. Procédé selon la revendication 12, dans lequel l'acide gras à chaîne courte mono-insaturé est l'acide crotonique.
